(19) Europäisches Patentamt
European Patent Office
Office européen des brevets

(11) **EP 3 511 904 B1**

## (12) EUROPÄISCHE PATENTSCHRIFT

(45) Veröffentlichungstag und Bekanntmachung des Hinweises auf die Patenterteilung:
**27.05.2020  Patentblatt 2020/22**

(51) Int Cl.:
***G06T 7/70*** *(2017.01)*

(21) Anmeldenummer: **18151255.9**

(22) Anmeldetag: **11.01.2018**

(54) **VERFAHREN ZUM BESTIMMEN EINER POSE EINES OBJEKTS IN EINER UMGEBUNG DES OBJEKTS MITTELS MULTI-TASK-LERNENS, SOWIE STEUERUNGSVORRICHTUNG**

METHOD FOR DETERMINING A POSE OF AN OBJECT IN AN ENVIRONMENT OF THE OBJECT USING MULTI TASK LEARNING AND CONTROL DEVICE

PROCÉDÉ DE DÉTERMINATION D'UNE POSE D'UN OBJET DANS UN ENVIRONNEMENT DE L'OBJET AU MOYEN DE L'APPRENTISSAGE MULTI-TÂCHES AINSI QUE DISPOSITIF DE COMMANDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**17.07.2019  Patentblatt 2019/29**

(73) Patentinhaber: **Siemens Aktiengesellschaft 80333 München (DE)**

(72) Erfinder:
- **ZAKHAROV, Sergey
  85614 Kirchseeon (DE)**
- **ALBARQOUNI, Shadi, Dr.
  80637 München (DE)**
- **BUI, Linda Mai
  82140 Olching/Grasslfing (DE)**
- **ILIC, Slobodan, Dr.
  81547 München (DE)**

(56) Entgegenhaltungen:
- **SERGEY ZAKHAROV ET AL: "3D object instance recognition and pose estimation using triplet loss with dynamic margin", 2017 IEEE/RSJ INTERNATIONAL CONFERENCE ON INTELLIGENT ROBOTS AND SYSTEMS (IROS), 25. September 2017 (2017-09-25), Seiten 552-559, XP055435885, DOI: 10.1109/IROS.2017.8202207 ISBN: 978-1-5386-2682-5**
- **BUI MAI ET AL: "X-Ray PoseNet: 6 DoF Pose Estimation for Mobile X-Ray Devices", 2017 IEEE WINTER CONFERENCE ON APPLICATIONS OF COMPUTER VISION (WACV), IEEE, 24. März 2017 (2017-03-24), Seiten 1036-1044, XP033096888, DOI: 10.1109/WACV.2017.120 [gefunden am 2017-05-11]**
- **WOHLHART PAUL ET AL: "Learning descriptors for object recognition and 3D pose estimation", 2015 IEEE CONFERENCE ON COMPUTER VISION AND PATTERN RECOGNITION (CVPR), IEEE, 7. Juni 2015 (2015-06-07), Seiten 3109-3118, XP032793759, DOI: 10.1109/CVPR.2015.7298930 [gefunden am 2015-10-14]**
- **BALNTAS VASSILEIOS ET AL: "Pose Guided RGBD Feature Learning for 3D Object Pose Estimation", 2017 IEEE INTERNATIONAL CONFERENCE ON COMPUTER VISION (ICCV), IEEE, 22. Oktober 2017 (2017-10-22), Seiten 3876-3884, XP033283259, DOI: 10.1109/ICCV.2017.416 [gefunden am 2017-12-22]**

**Beschreibung**

Die Erfindung betrifft ein Verfahren zum Bestimmen einer Pose eines Objekts in dessen Umgebung. Mittels einer optischen Erfassungseinrichtung wird das Objekt und dessen Umgebung als aktuelle Aufnahme erfasst und mittels einer optischen Bildanalyse wird die Pose des Objekts bestimmt. Mittels eines neuronalen Netzes wird die Pose als Ausgabe des neuronalen Netzes ermittelt. Das neuronale Netz wird mittels eines Multi-Task-Lernens durch eine Posenregression und durch ein Deskriptorlernen, welches durch Nutzung einer Triplet-wise-Loss-Funktion und einer Pair-wise-Loss-Funktion bestimmt wird, angelernt. Ferner betrifft die Erfindung eine Steuerungsvorrichtung.

Im Bereich Computer-Vision ist das Bestimmen einer Pose eines Objekts bereits bekannt. Beispielsweise kann mittels einer 2D-View-spezifischen Vorlage eine Objekterkennung und eine Posenschätzung durchgeführt werden. Durch die Berechnung von handgefertigten Eigenschafts-Darstellung für einen bekannten Satz von Ansichten können die meisten ähnlichen Übereinstimmungen für ein gegebenes Template mit einer unbekannten Klasse und Pose gefunden werden.

Ebenfalls ist bereits bekannt, um diesem Problem entgegenzutreten, lernbasierte Methoden zu verwenden, anstatt sich auf handgefertigte Eigenschaften zu verlassen, um auf beschreibender und robustere Eigenschafts-Darstellungen für die Abfrage von Objektposition schließen zu können. Beispielsweise beschreibt Kehl et al." Deep Learning of Local RGB-D Patches of 3D Object Detection and 6D Pose Estimation" die Verwendung eines Autokodierers um Eigenschafts-Deskriptoren für RGB-D-Bildpatches zu erlernen.

Wohlhart und Lepetit schlagen in ihrer Veröffentlichung "Learning Descriptors for Object Recognition and 3D Pose Estimation" eine Erweiterung dieser Idee eines Deskriptorlernens mit einem neuronalen Netz vor. Durch die Durchsetzung des euklidschen Verlusts zwischen Aufnahmen aus ähnlichen Ansichten, die nahe beieinander liegen, und aus verschiedenen Objekten, die weit entfernt sind, können sowohl die Identität des Objekts als auch die Poseninformationen in hoch separierbaren Eigenschafts-Deskriptoren gespeichert werden. Die Pose für eine gegebene Testaufnahme kann durch die Suche nach dem nächsten Nachbarn geschätzt werden, um die nächstgelegene entsprechende Pose des von Objekts zu finden. Einer der Hauptnachteile dieser Methode ist, dass die Rotation der Ebene von dem Verfahren nicht berücksichtigt wird, was in der Praxis nur selten der Fall ist.

Moderne Methoden zur Schätzung der Objektposition sowie zur Kameralokalisierung schlagen vor, sich auf die Pixel-zu-3D-Punkt-Korrespondenzvorhersage zu verlassen, die auf dem "Forest" Klassifikationsverfahren beruhen und auf einer iterativen Posenverfeinerung basiert.

Nochmals neue Methoden haben direkte Regressionsansätze eingeführt, um die Position und Ausrichtung einer Kamera für Innen- und Außenaufnahmen zu regressieren. Diese Methode ist zwar in der Lage, die sechs Freiheitsgrade der Kamera durchgängig mit nur einer RGB-Aufnahme als Eingangssignal abzuleiten, die Genauigkeit ist aber deutlich geringer als das, was die oben genannten Methoden auf Basis der Pixel-zu-3D-Punkt-Korrespondenzvorhersage erreichen könnten.

In der Veröffentlichung "X-Ray PoseNet: 6 DoF Pose Estimation for Mobile X-Ray Devices" von Bui et al. wird ein Regressionsansatz verwendet, um die geometrischen Parameter eines mobilen Röntgensystems vorherzusagen, um die Berechnung tomographisch rekonstruierter Volumina zu ermöglichen. Zusätzlich zum Training des Modells über den Posenverlust wird der Rekonstruktionsverlust zwischen der Röntgenprojektionsaufnahme des Feldversuchs und der vorhergesagten Aufnahme unter Verwendung der aktuellen Posenschätzung verwendet, um das Modell für seine endgültige Anwendung, die tomographische Rekonstruktion, zu verbessern.

In der Veröffentlichung von Balntas et al. "Pose Guided RGBD Feature Learning for 3D Object Pose Estimation" werden die Auswirkungen der Verwendung von Objekt-Posen als Anleitung zum Anlernen robuster Eigenschaften für die 3-D-Objektposen-Schätzung untersucht. Es werden die exakten Posenunterschiede zwischen den Trainingsmustern untersucht und es wird darauf abgezielt, die Einbettung so zu erlernen, dass die Abstände im Posenraum proportional den Abständen im Eigenschaftsraum sind. Sollten Objekte symmetrisch sein, werden datengesteuerte Gewichte vorgeschlagen, die die Objektsymmetrien, wie bei der Messung der Posenabstände, widerspiegeln. Darüber hinaus wird die Ende-zu-Ende Posenregression untersucht und die Posenerkennung in einem neuronalen Netz durchgeführt und somit als eine weitere Posenanleitung für das Eigenschafts-Lernen verwendet.

In der Veröffentlichung von Zakharov et al. "3D Object Recognition and Pose Estimation Using Triplet Loss with Dynamic Margin" wird ein Margin-Term in einer Triplet-wise-Loss-Funktion vorgeschlagen.

Aufgabe der folgenden Erfindung ist es, ein Verfahren sowie eine Steuerungsvorrichtung zu schaffen, mittels welchem bzw. mittels welcher eine verbesserte Bestimmung einer Pose eines Objekts in dessen Umgebung durchgeführt werden kann.

Diese Aufgabe wird durch ein Verfahren sowie durch eine Steuerungsvorrichtung gemäß den unabhängigen Ansprüchen gelöst.

Ein Aspekt der Erfindung betrifft ein Verfahren zum Bestimmen einer Pose eines Objekts in dessen Umgebung. Mittels einer optischen Erfassungseinrichtung wird das Objekt und dessen Umgebung als aktuelle Aufnahme erfasst und mittels einer optischen Bildanalyse wird die Pose des Objekts bestimmt. Mittels eines neuronalen Netzes wird die Pose als Ausgabe des neuronalen Netzes ermittelt. Das neuronale Netz wird mittels eines Multi-Task-Lernens durch eine Posenregression und durch ein Deskriptorlernen, welches durch Nutzung einer Triplet-wise-Loss-Funktion und einer Pair-wise-Loss-Funktion bestimmt wird, angelernt.

Es ist vorgesehen, dass die Posenregression mittels Quaternionen und die Triplet-wise-Loss-Funktion abhängig von einem dynamischen Margin-Term bestimmt werden.

Dadurch ist es ermöglicht, dass die Stärken der Regression und des mannigfaltigen Lernens kombiniert werden können, um trennbare Eigenschafts-Deskriptoren zu erlernen, wodurch die Vorteile bei der Bestimmung der optischen Eigenschaft genutzt werden können. Dadurch können robuste Eigenschafts-Deskriptoren entwickelt werden, die insbesondere aus der aktuellen Aufnahme lernen. Im Vergleich zu den bisherigen Methoden zur Lösung dieser Probleme, die die Suche nach dem nächsten Nachbarn auf einen geschätzten Deskriptorraum verwenden, ist es erfindungsgemäß vorgesehen ein effizientes Multi-Task-Lernframework mit direkter Posenregression zu nutzen.

$$L_{MTL} = L_{pose} + L_d,$$

wobei $L_{MTL}$ dem Multi-Task-Lernen, $L_{pose}$ der Posenregression und $L_d$ dem Deskriptorlernen entspricht. Dadurch kann die Pose direkt geschätzt werden, anstatt Methoden der Suche nach dem nächsten Nachbarn alleine anzuwenden, deren Komplexität linear mit der Anzahl der Objekte wächst. Dadurch kann vereinfacht die Bestimmung der Pose des Objekts durchgeführt werden. Darüber hinaus kann dadurch eine detaillierte Analyse der Suche nach dem nächstgelegenen Nachbarn mittels Eigenschafts-Deskriptoren und Regressionen durchgeführt werden.

Dadurch kann ebenfalls verbessert eine Pose des Objekts bestimmt werden.

Insbesondere wird als Pose des Objekts eine Orientierung und/oder eine Position des Objekts in der Umgebung des Objekts angesehen.

Mittels der erfindungsgemäßen Pair-wise-Loss-Funktion kann der exakte Posenunterschied zwischen Trainingsaufnahmen für verschiedene Objekte und Posen berücksichtigt werden. In vorteilhafter Weise wird die Pose direkt im Posenraum verbessert, d.h. der Winkelfehler der Quaternionen Darstellung kann minimiert werden.

Insbesondere hat es sich herausgestellt, dass die Posenregression sich positiv auf das Deskriptorlernen auswirkt und das Deskriptorlernen bei der Posenregression unterstützt. Insbesondere hat dies vorteilhafte Auswirkungen auf das Ende-zu-Ende Lernen. Insbesondere bei großen Objektdatenbanken führt dies zu einer verbesserten Verarbeitung und zu einer verbesserten Bestimmung der Pose des Objekts.

Gemäß einer vorteilhaften Ausgestaltungsform wird durch die Bestimmung der Pose des Objekts eine Objektart erkannt und/oder eine Position des Objekts relativ in einer Umgebung des Objekts bestimmt. Dadurch ist es insbesondere möglich, dass aus der aktuellen Aufnahme sowohl eine Objekterkennung durchgeführt werden kann und alternativ oder ergänzend eine Position des Objekts in der Umgebung des Objekts bestimmt werden kann. Dadurch ist das Verfahren flexibel einsetzbar und kann in vielen technischen Gebieten eingesetzt werden.

Es hat sich weiterhin als vorteilhaft erwiesen, wenn bei der Posenregression eine Eingabe x in das neuronale Netz zu einem niedriger dimensionierten Eigenschaftsvektor $f(x) \in R^d$ abgebildet wird. Dies bedeutet, dass die Ausgabe der letzten vollständig verbundenen Stufe, bevor sie zur Regression der Pose mit der folgenden Verlust-Funktion verwendet wird, folgende Funktion aufweist:

$$L_{pose} = \left\| q - \frac{\tilde{q}}{\|\tilde{q}\|} \right\|_2^2,$$

wobei q die entsprechende Feldversuchspose ist.

Weiterhin vorteilhaft ist, wenn zum Lernen der Triplet-wise-Loss-Funktion eine mit der aktuellen Aufnahme korrespondierende Ankeraufnahme bestimmt wird und eine Ziehaufnahme derart gewählt wird, dass die aktuelle Aufnahme des Objekts mit einer eine ähnliche Pose aufweisenden Aufnahme des Objekts korrespondiert. Für den Vergleich mit der Basislinienmethode kann mit dem Trainingsset $S_{train}$ eine Datenbank mit Aufnahmeeigenschafts-Deskriptoren für die Suche nach dem nächsten Nachbarn generiert werden, die dann verwendet wird, um die beste korrespondierende Pose für eine unbekannte Testaufnahme zu erhalten. Um eine effiziente Regression zu erreichen, müssen die robusten Aufnahmeeigenschafts-Deskriptoren $f(x)$ erstellt werden. Es wird die Triplet-wise-Loss-Funktion $L_{triplets}$, welche eine Verlustfunktion darstellt, verwendet, um das neuronale Netz zu trainieren. Es wird durch eine Reihe von Triplets $(s_i, s_j, s_k) \in T$ trainiert, wobei eine Probe $s_i$ (anchor, Ankeraufnahme) der aktuellen Aufnahme $x_i$ entspricht und eine Probe $s_j$ (puller, Ziehaufnahme) so gewählt wird, dass die Aufnahme dem gleichen Objekt $c_j$ entspricht, das von einer ähnlichen Pose $q_j$ aus betrachtet wird:

$$\|f(x_i) - f(x_k)\|_2^2$$

Ebenfalls vorteilhaft ist, wenn zum Lernen der Triplet-wise-Loss-Funktion eine mit der aktuellen Aufnahme korrespondierende Ankeraufnahme bestimmt wird und eine Stoßaufnahme derart gewählt wird, dass die aktuelle Aufnahme des Objekts mit einer ein anderes Objekt aufweisenden Aufnahme oder mit einer eine unterschiedliche Pose aufweisenden Aufnahme des Objekts korrespondiert. Es wird eine Probe $s_k$(pusher, Stoßaufnahme) so gewählt, dass die Aufnahme $x_k$ entweder einem anderen Objekt $c_k$ oder dem gleichen Objekt $c_i$ entspricht, aber unter einer ganz anderen Pose $q_k, x \in \mathbb{R}^{n \times n}$ betrachtet wird:

$$\left\| f(x_i) - f(x_j) \right\|_2^2$$

Der Verlust, der über eine Gruppe von Triplets definiert wird, wird insbesondere wie folgt formuliert:

$$L_{triplets} = \sum_{(s_i, s_j, s_k) \epsilon T} max \left( 0,1 - \frac{\|f(x_i) - f(x_k)\|_2^2}{\left\| f(x_i) - f(x_j) \right\|_2^2 + m} \right)$$

In einer vorteilhaften Ausgestaltungsform wird der dynamische Margin-Term bei einer Korrespondenz der aktuellen Aufnahme mit einer eine ähnliche Pose aufweisenden Aufnahme des Objekts durch eine Arcus-Kosinus-Funktion bestimmt wird. Der dynamische Margin-term $m$ wird wie folgt definiert:

$$m = \begin{cases} 2\arccos(|q_i \cdot q_j|) & if\ c_i = c_j, \\ n & else, for\ n > \pi \end{cases}$$

Der dynamische Margin-term $m$ sorgt dafür, dass Objekte verschiedener Klassen weiter weggestoßen werden, wobei der Margin-term $m$ für die gleichen Objekte vom Winkelabstand zwischen den aktuellen Blickwinkeln $q_i$ und $q_j$ abhängt.

Gemäß einer weiteren vorteilhaften Ausgestaltungsform kann der dynamische Margin-Term einer Korrespondenz der aktuellen Aufnahme mit einer ein anderes Objekt aufweisenden Aufnahme oder mit einer eine unterschiedliche Pose aufweisenden Aufnahme des Objekts als lineare Funktion bestimmt werden. Der dynamische Margin-term $m$ wird wie folgt definiert:

$$m = \begin{cases} 2\arccos(|q_i \cdot q_j|) & if\ c_i = c_j, \\ n & else, for\ n > \pi \end{cases}$$

Der dynamische Margin-term $m$ sorgt dafür, dass Objekte verschiedener Klassen weiter weggestoßen werden, wobei der Margin-term $m$ für die gleichen Objekte vom Winkelabstand zwischen den aktuellen Blickwinkeln $q_i$ und $q_j$ abhängt.

Ebenfalls vorteilhaft ist, wenn mittels der Pair-wise-Loss-Funktion die Deskriptoren, welche das gleiche Objekt in einer gleichen oder zumindest ähnlichen Pose aber mit einer jeweils unterschiedlichen Umgebung beschreiben und einer von unterschiedlichen Domäne stammen, zusammengestoßen werden. Die Pair-wise-Loss-Funktion $L_{pairs}$ wird aus den Paaren $(s_i, s_j) \in P$ berechnet und ist definiert als:

$$L_{pairs} = \sum_{(s_i, s_j) \epsilon P} \left\| f(x_i) - f(x_j) \right\|_2^2,$$

wobei $f(x_i)$ der Aufnahmeeigenschafts-Deskriptor $q$ ist, der aus dem neuronalen Netz für die aktuelle Aufnahme $x_i$ extrahiert wurde.

Ebenfalls vorteilhaft ist, wenn zusätzlich oder alternativ mittels bestimmten Eigenschaftsvektoren $f(x)$ mittels einer eine Nächster-Nachbar-Suche eine Position des Objekts relativ in der Umgebung des Objekts bestimmt wird. Dadurch können die resultierenden Eigenschafts-Deskriptoren nach ihrer Pose getrennt werden und ihre Beziehung genutzt werden, um einen direkten Regressionsansatz hinzuzufügen.

Ebenfalls vorteilhaft ist, wenn zumindest eine Symmetrieeigenschaft des Objekts bei der Bildanalyse berücksichtigt wird, insbesondere nur ein erster Teil des symmetrischen Objekts, welcher zumindest zu einem zweiten Teil des symmetrischen Objekts symmetrisch ist, analysiert wird. Insbesondere wird die Anzahl der geänderten Posen dadurch begrenzt, in dem nur die einzigartigen Posen beibehalten werden. Dies hat den Vorteil, dass weniger Speicherplatz benötigt wird (durch extra gerenderte Posen). Dadurch kann Rechenkapazität und Rechenzeit bei der Bestimmung der Eigenschaft des Objekts eingespart werden.

Ebenfalls vorteilhaft ist, wenn die aktuelle Aufnahme als Tiefenaufnahme erfasst wird. Bei der Tiefenaufnahme ist es durch die Bildanalyse ermöglicht, dass Tiefen-Informationen in einer 2D-Aufnahme genutzt werden können, umso für die Bildanalyse eine Information zu den Tiefenlagen zu erhalten. Es handelt sich bei den Tiefenaufnahmen nicht um RGB-Aufnahmen. Dadurch kann gegenüber dem Stand der Technik insbesondere Rechenzeit eingespart werden, da lediglich die Tiefenaufnahmen für die Bestimmung der Pose des Objekts genutzt werden.

Ein weiterer Aspekt der Erfindung betrifft eine Steuerungsvorrichtung, welche dazu ausgebildet ist, ein Verfahren nach dem vorhergehenden Aspekt oder einer vorteilhaften Ausführungsform davon durchzuführen. Bei der Steuerungsvorrichtung handelt es sich insbesondere um eine elektronische Recheneinrichtung.

Vorteilhafte Ausführungsformen des Verfahrens sind als vorteilhafte Ausführungsformen der Steuerungsvorrichtung anzusehen. Die Steuerungsvorrichtung weist dazu gegenständliche Merkmale auf, welche eine Durchführung des Verfahrens oder eine vorteilhafte Ausgestaltungform davon ermöglichen.

Weitere Merkmale und Vorteile sind der folgenden Beschreibung anhand der beigefügten Figuren zu entnehmen. In den Figuren bezeichnen gleiche Bezugszeichen gleiche Merkmale und Funktionen. Die Ausführungsbeispiele dienen lediglich der Erläuterung der Erfindung und sollen diese nicht beschränken.

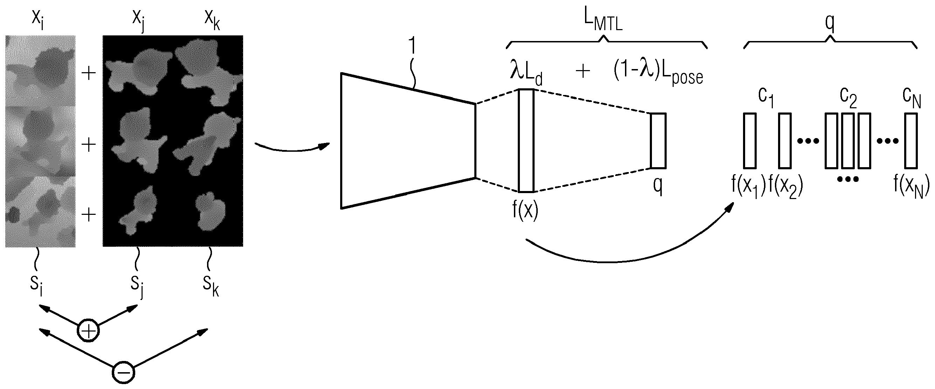

Dabei zeigt die einzige Figur eine schematische Ansicht einer Ausführungsform des Verfahrens.

In der Figur werden gleiche und funktionsgleiche Elemente mit den gleichen Bezugszeichen versehen.

Die Figur zeigt in schematischer Ansicht eine Ausführungsform des Verfahrens. Mit einem Input-Tiefen-Aufnahmepatch werden entsprechende Triplets und Paare während des Trainings erzeugt, um sowohl die mannigfaltige Einbettung als auch die Erstellung robuster Eigenschafts-Deskriptoren und Posenregression $L_{pose}$ durchzuführen.

Das in der Figur gezeigte Ausführungsbeispiel des Verfahrens beginnt mit dem Training eines neuronalen Netzes 1 für einen gegebenen Trainingssatz $S_{train} = \{s_1, \cdots, s_N\} = \{(x_1, c_1, q_1), \cdots, \{x_N, c_N, q_N)\}$ bestehend aus N Proben S. Jede Probe s besteht aus einem Tiefenaufnahmeteil $x \in \mathbb{R}^{n \times n}$ eines Objekts $c \in N$, zusammen mit dem entsprechenden Posenvektor $q \in \mathbb{R}^4$, der die durch Quaternionen dargestellte Orientierung gibt.

Es ist vorgesehen, die Abbildungsfunktion $\phi: X \rightarrow Q$ zu modellieren, das heißt für eine gegebene Eingabe x wird der vorhergesagte Posenvektor $\tilde{q}$ wie folgt erhalten:

$$\tilde{q} = \phi(x, w),$$

wobei w die Modellparameter sind. Es ist vorgesehen eine genaue Posenschätzung für alle unsichtbaren Daten zu erhalten. Es ist zusätzlich vorgesehen einen gut geclusterten Eigenschaftsraum zu haben. Um dies zu erreichen wird ein Multi-Task-Lernen $L_{MTL}$ durchgeführt. Das Multi-Task-Lernen $L_{MTL}$ wird mittels Posenregression $L_{pose}$ und Deskriptorlernen $L_d$ durchgeführt. So kann die übergeordnete Zielfunktion wie folgt beschrieben werden:

$$L_{MTL} = L_{pose} + L_d,$$

wobei $L_{pose}$ und $L_d$ die Zielfunktionen für die Posenregressionsaufgabe bzw. die Deskriptorlernaufgabe sind.

Während des Tests bildet das neuronale Netz 1 eine gegebene Eingabe x auf einen niederdimensionalen Merkmalsvektor $f(x) \in R^d$ ab, das heißt die Ausgabe der letzten vollständig verbundenen Stufe, bevor diese zur Regression der Pose verwendet wird, wobei die folgende Verlustfunktion verwendet wird:

$$L_{pose} = \left\| q - \frac{\tilde{q}}{\|\tilde{q}\|} \right\|_2^2,$$

wobei q die entsprechende Feldversuchspose ist.

Für den Vergleich mit der Basislinienmethode kann mit dem Trainingsset $S_{train}$ eine Datenbank mit Aufnahme-eigenschafts-Deskriptoren q für die Suche nach dem nächsten Nachbarn generiert werden, die dann verwendet wird, um die beste korrespondierende Pose für eine unbekannte Testaufnahme zu erhalten. Um eine effiziente Regression zu erreichen, müssen die robusten Aufnahmeeigenschafts-Deskriptoren q erstellt werden. Es wird die Triplet-wise-Loss-Funktion $L_{triplets}$, welche eine Verlustfunktion darstellt, verwendet, um das neuronale Netz 1 zu trainieren. Dieses wird durch eine Reihe von Triplets $(s_i, s_j, s_k) \in T$ trainiert, wobei eine Probe $s_i$ (anchor, Ankeraufnahme) der aktuellen Aufnahme $x_i$, entspricht und eine Probe $s_j$ (puller, Ziehaufnahme) so gewählt wird, dass die Aufnahme dem gleichen Objekt $c_i$ entspricht, das von einer ähnlichen Pose $q_j$ aus betrachtet wird. Allerdings wird eine Probe $s_k$ (pusher, Stoßaufnahme) so gewählt, dass die Aufnahme $x_k$ entweder einem anderen Objekt $c_k$ oder dem gleichen Objekt $c_i$ entspricht, aber unter einer ganz anderen Pose $q_k$ $x \in \mathbb{R}^{n \times n}$ betrachtet wird. Der Verlust, der über eine Gruppe von Triplets definiert wird, wird wie folgt formuliert:

$$L_{triplets} = \sum_{(s_i, s_j, s_k) \epsilon T} max\left(0, 1 - \frac{\|f(x_i) - f(x_k)\|_2^2}{\|f(x_i) - f(x_j)\|_2^2 + m}\right),$$

wobei Blickwinkel unter ähnlichen Posen dicht beieinander zusammengezogen werden und ungleiche oder unterschiedliche Objekte weiter weggestoßen werden. Ein dynamischer Margin-Term m wird wie folgt definiert:

$$m = \begin{cases} 2 \arccos(|q_i \cdot q_j|) & if\ c_i = c_j, \\ n & else, for\ n > \pi \end{cases}$$

Der dynamische Margin-Term m sorgt dafür, dass Objekte verschiedener Klassen weiter weggestoßen werden, wobei der Margin-Term m für die gleichen Objekte vom Winkelabstand zwischen den aktuellen Blickwinkeln $q_i$ und $q_j$ abhängt.

Darüber hinaus wird eine Pair-wise-Loss-Funktion $L_{pairs}$ verwendet, um die Aufnahmeeigenschafts-Deskriptoren q desselben Objekts unter der gleichen oder sehr ähnlichen Pose, aber mit unterschiedlichen Hintergründen oder aus verschiedenen Domänen (synthetisch und real) zusammenzuziehen. Die Pair-wise-Loss-Funktion $L_{pairs}$ wird auf den Paaren $(s_i, s_j) \in P$ berechnet und ist definiert als:

$$L_{pairs} = \sum_{(s_i, s_j) \epsilon P} \|f(x_i) - f(x_j)\|_2^2,$$

wobei $f(x_i)$ der Aufnahmeeigenschafts-Deskriptor q ist, der aus dem neuronalen Netz 1 für das die aktuelle Aufnahme $x_i$ extrahiert wurde.

Anstatt sich jedoch nur auf die berechneten Merkmale für die Suche nach dem nächsten Nachbarn zu verlassen ist vorgesehen zusätzlich die Tatsache zu nutzen, dass die resultierenden Aufnahmeeigenschafts-Deskriptoren q nach ihrer Pose getrennt sind und ihre Beziehung nutzen, um einen direkten Regressionsansatz hinzuzufügen.

Insgesamt erhalten wir die folgende Verlustfunktion $L_d$ für das Deskriptor-Lernen:

$$L_d = L_{triplets} + L_{pairs}$$

Das Deskriptor-Lernen $L_d$ auf einem Deskriptor-Speicher 2 abgespeichert. Es ist somit ein End-to-End Multi-Task-Lernframework für die Objekterkennung und Posenschätzung vorgestellt. Durch die Einführung eines Regressions-Frameworks mit robustem Aufnahmeeigenschafts-Deskriptor-Lernen kann eine vollständige Eliminierung der Notwendigkeit der Suche nach dem nächsten Nachbarn im Vergleich zu den Baselinemethoden durchgeführt werden, was wiederum zu einer Verbesserung des Speicherverbrauchs und der Effizienz der Methoden führt. Dadurch ergeben sich Vorteile, indem es die Posenregression $L_{pose}$ und das Deskriptor-Lernen $L_d$ fördert und die resultierende Genauigkeit für die Abfrage der nächstgelegenen Nachbarposition verbessert.

**EP 3 511 904 B1**

**Patentansprüche**

1. Computerimplementiertes Verfahren zum Bestimmen einer Pose eines Objekts in dessen Umgebung, wobei mittels einer optischen Erfassungseinrichtung das Objekt und dessen Umgebung als aktuelle Aufnahme ($x_i$) erfasst und mittels einer optischen Bildanalyse die Pose des Objekts bestimmt wird, und wobei mittels eines neuronalen Netzes (1) die Pose des Objekts als Ausgabe des neuronalen Netzes (1) ermittelt wird, wobei das neuronale Netz (1) mittels eines Multi-task-Lernens ($L_{MTL}$) durch eine Verwendung von Posenregression ($L_{pose}$) und Deskriptorlernen ($L_d$), welches durch Nutzung einer Triplet-wise-Loss-Funktion ($L_{triplet}$) und einer Pair-wise-Loss-Funktion ($L_{pair}$) bestimmt wird, angelernt wird, wobei die Posenregression ($L_{pose}$) mittels Quaternionen und die Triplet-wise-Loss-Funktion ($L_{triplet}$) abhängig von einem dynamischen Margin-Term (m) bestimmt werden.

2. Verfahren nach Anspruch 1, wobei durch die Bestimmung der Pose des Objekts eine Objektart erkannt wird und/oder eine Position des Objekts relativ in der Umgebung des Objekts bestimmt wird.

3. Verfahren nach einem der vorhergehenden Ansprüche, wobei bei der Posenregression ($L_{pose}$) eine Eingabe x in das neuronale Netz (1) zu einem niedriger dimensionierten Eigenschaftsvektor $f(x) \in R^d$ abgebildet wird.

4. Verfahren nach einem der vorhergehenden Ansprüche, wobei zum Lernen der Triplet-wise-Loss-Funktion ($L_{triplet}$) eine mit der aktuellen Aufnahme ($x_i$) korrespondierende Ankeraufnahme ($s_i$) bestimmt wird und eine Ziehaufnahme ($s_j$) derart gewählt wird, dass die aktuelle Aufnahme ($x_i$) des Objekts mit einer eine ähnliche Pose aufweisenden Aufnahme des Objekts korrespondiert.

5. Verfahren nach einem der vorhergehenden Ansprüche, wobei, zum Lernen der Triplet-wise-Loss-Funktion ($L_{triplet}$) eine mit der aktuellen Aufnahme ($x_i$) korrespondierende Ankeraufnahme ($s_i$) bestimmt wird und eine Stossaufnahme ($s_k$) derart gewählt wird, dass die aktuelle Aufnahme des Objekts mit einer ein anderes Objekt aufweisenden Aufnahme ($x_i$) oder mit einer eine unterschiedliche Pose aufweisenden Aufnahme des Objekts korrespondiert.

6. Verfahren nach Anspruch 4, wobei der dynamische Margin-Term (m) bei einer Korrespondenz der aktuellen Aufnahme ($x_i$) mit einer eine ähnlichen Pose aufweisenden Aufnahme des Objekts durch eine Arcus-Cosinus-Funktion bestimmt wird.

7. Verfahren nach Anspruch 5, wobei der dynamische Margin-Term (m) bei einer Korrespondenz der aktuellen Aufnahme ($x_i$) mit einer ein anderes Objekt aufweisenden Aufnahme oder mit einer eine unterschiedliche Pose aufweisende Aufnahme des Objekts als lineare Funktion bestimmt wird.

8. Verfahren nach einem der vorhergehenden Ansprüche, wobei mittels der Pair-wise-Loss-Funktion ($L_{pair}$) die Deskriptoren (q), welche das gleiche Objekt in einer gleichen oder zumindest ähnlichen Pose aber mit einer jeweils unterschiedlichen Umgebung beschreiben oder von einer unterschiedlichen Domäne stammen, zusammengezogen werden.

9. Verfahren nach einem der vorhergehenden Ansprüche, wobei zusätzlich oder alternativ mittels bestimmten Eigenschaftsvektoren f(x) mittels einer eine Nächster-Nachbar-Suche eine Position des Objekts relativ in der Umgebung des Objekts bestimmt wird.

10. Verfahren nach einem der vorhergehenden Ansprüche, wobei zumindest eine Symmetrieeigenschaft des Objekts bei der Bildanalyse berücksichtigt wird, insbesondere nur ein erster Teil des symmetrischen Objekts, welcher zumindest zu einem zweiten Teil des symmetrischen Objekts symmetrisch ist, analysiert wird.

11. Verfahren nach einem der vorhergehenden Ansprüche, wobei die aktuelle Aufnahme ($x_i$) als Tiefenaufnahme erfasst wird.

12. Steuerungsvorrichtung umfassend Mittel zur Ausführung eines Verfahrens nach einem der Ansprüche 1 bis 11.

**Claims**

1. Computer-implemented method for determining a pose of an object in the environment thereof, wherein, ausing an optical capturing device, the object and the environment thereof are captured as a current recording ($x_i$) and, using

optical image analysis, the pose of the object is determined, and wherein, using a neural network (1), the pose of the object is ascertained as an output of the neural network (1), wherein the neural network (1) is trained using multi-task learning ($L_{MTL}$) by using pose regression ($L_{pose}$) and descriptor learning ($L_d$), which is determined by using a triplet-wise loss function ($L_{triplet}$) and a pair-wise loss function ($L_{pair}$), wherein the pose regression ($L_{pose}$) is determined using quaternions and the triplet-wise loss function ($L_{triplet}$) is determined in dependence on a dynamic margin term (m).

2. Method according to Claim 1, wherein, by determining the pose of the object, an object type is identified and/or a relative position of the object in the environment of the object is determined.

3. Method according to either of the preceding claims, wherein, in the pose regression ($L_{pose}$), an input x into the neural network (1) is mapped to a lower-dimensional property vector $f(x) \in R^d$.

4. Method according to one of the preceding claims, wherein for learning the triplet-wise loss function ($L_{triplet}$) an anchor recording ($s_i$) corresponding to the current recording ($x_i$) is determined and a puller recording ($s_j$) is selected such that the current recording ($x_i$) of the object corresponds to a recording of the object having a similar pose.

5. Method according to one of the preceding claims, wherein, for learning the triplet-wise loss function ($L_{triplet}$) an anchor recording ($s_i$) corresponding to the current recording ($x_i$) is determined and a pusher recording ($s_k$) is selected such that the current recording of the object corresponds to a recording ($x_i$) having a different object or to a recording of the object having a different pose.

6. Method according to Claim 4, wherein the dynamic margin term (m) is determined, in the case of a correspondence of the current recording ($x_i$) to a recording of the object having a similar pose, by an arc cosine function.

7. Method according to Claim 5, wherein the dynamic margin term (m) is determined, in the case of a correspondence of the current recording ($x_i$) to a recording having a different object or to a recording of the object having a different pose, as a linear function.

8. Method according to one of the preceding claims, wherein, using a pair-wise loss function ($L_{pair}$), the descriptors (q), which describe the same object in a same or at least similar pose but with a respectively different environment or stem from a different domain, are pulled together.

9. Method according to one of the preceding claims, wherein, additionally or alternatively, using specific property vectors f(x), a relative position of the object in the environment of the object is determined by way of a next-neighbour search.

10. Method according to one of the preceding claims, wherein at least one symmetry property of the object is taken into account in the image analysis, in particular only one first part of the symmetric object that is symmetric at least to a second part of the symmetric object is analysed.

11. Method according to one of the preceding claims, wherein the current recording ($x_i$) is captured as a depth recording.

12. Control apparatus comprising means for performing a method according to one of Claims 1 to 11.

**Revendications**

1. Procédé assisté par ordinateur de détermination d'une pose d'un objet dans son environnement, dans lequel, au moyen d'un dispositif optique de détection, on détecte l'objet et son environnement sous la forme d'un enregistrement ($x_i$) en cours et, au moyen d'une analyse optique d'image, on détermine la pose de l'objet, et dans lequel, au moyen d'un réseau (1) neuronal, on détermine la pose de l'objet comme sortie du réseau neuronal, le réseau (1) neuronal subissant un apprentissage au moyen d'un apprentissage ($L_{MTL}$) multitâches par une utilisation d'une régression ($L_{pose}$) de pose et d'un apprentissage ($L_d$) à descripteur, qui est déterminé par utilisation d'une fonction ($L_{triplet}$) de perte triplet par triplet et d'une fonction ($L_{pair}$) de perte paire par paire, dans lequel on détermine la régression ($L_{pose}$) de pose au moyen de quaternions et la fonction ($L_{triplet}$) de perte triplet par triplet en fonction d'un terme (m) de marge dynamique.

**2.** Procédé suivant la revendication 1, dans lequel, dans la détermination de la pose de l'objet, on reconnaît un type d'objet et/ou on détermine une position de l'objet par rapport à l'environnement de l'objet.

**3.** Procédé suivant l'une des revendications précédentes, dans lequel, dans la régression ($L_{pose}$) de pose, on applique une entrée x dans le réseau (1) neuronal à un vecteur $f(x) \in R^d$ de propriété de dimension plus petite.

**4.** Procédé suivant l'une des revendications précédentes, dans lequel, pour l'apprentissage de la fonction ($L_{triplet}$) triplet par triplet, on détermine un enregistrement ($s_i$) d'ancre correspondant à l'enregistrement ($x_i$) en cours et on choisit un enregistrement tireur ($s_j$), de manière à ce que l'enregistrement ($x_i$) en cours de l'objet corresponde à un enregistrement de l'objet ayant une pose semblable.

**5.** Procédé suivant l'une des revendications précédentes, dans lequel, pour l'apprentissage de la fonction ($L_{triplet}$) à perte triplet par triplet, on détermine un enregistrement ($s_i$) d'ancrage correspondant à l'enregistrement ($x_i$) en cours et on choisit un enregistrement ($s_k$) pousseur, de manière à ce que l'enregistrement en cours de l'objet corresponde à un enregistrement ($x_i$) ayant un autre objet ou à un enregistrement ayant une pose différente de l'objet.

**6.** Procédé suivant la revendication 4, dans lequel on détermine, par une fonction arc cosinus le terme (m) de marge dynamique pour une correspondance de l'enregistrement ($x_i$) en cours à un enregistrement ayant une pose semblable de l'objet.

**7.** Procédé suivant la revendication 5, dans lequel on détermine, sous la forme d'une fonction linéaire le terme (m) de marge dynamique pour une correspondance de l'enregistrement ($x_i$) en cours à un enregistrement ayant un autre objet ou à un enregistrement de l'objet ayant une pose différente.

**8.** Procédé suivant l'une des revendications précédentes, dans lequel, au moyen de la fonction ($L_{pair}$) de perte paire par paire, on contracte les descripteurs (q), qui décrivent le même objet dans une même pose ou dans une pose au moins semblable mais avec un environnement respectivement différent ou qui proviennent d'un domaine différent.

**9.** Procédé suivant l'une des revendications précédentes, dans lequel, en plus ou en variante, au moyen de vecteurs f(x) de propriété déterminés, on détermine, au moyen d'une recherche du voisin le plus proche, une position de l'objet par rapport à l'environnement de l'objet.

**10.** Procédé suivant l'une des revendications précédentes, dans lequel on tient compte au moins d'une propriété de symétrie de l'objet dans l'analyse d'image, en n'analysant qu'une première partie de l'objet symétrique, qui est symétrique au moins d'une deuxième partie de l'objet symétrique.

**11.** Procédé suivant l'une des revendications précédentes, dans lequel on prend l'enregistrement ($x_i$) en cours sous la forme d'un enregistrement de profondeur.

**12.** Dispositif de commande comprenant les moyens pour effectuer un procédé suivant l'une des revendications 1 à 11.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **BALNTAS et al.** *Pose Guided RGBD Feature Learning for 3D Object Pose Estimation*

- **ZAKHAROV et al.** *3D Object Recognition and Pose Estimation Using Triplet Loss with Dynamic Margin*